# EUROPEAN PATENT APPLICATION

(11) **EP 4 794 306 A1**
(43) Date of publication of application: **19.08.2026**
(21) Application number: 25157496.8
(22) Date of filing: 12.02.2025
(51) Int. Cl.: H04L 67/141, H04L 67/148, H04L 69/164, H04L 69/326

(54) **METHOD FOR DELEGATING QUIC CONNECTIONS BETWEEN HOSTS**

(71) Applicant: Université catholique de Louvain, 1348 Louvain-la-Neuve (BE)
(72) Inventor: Bonaventure, Olivier, 5030 Gembloux (BE); Piraux, Maxime, 1060 Saint-Gilles (BE)
(74) Representative: Ipsilon Belgium

(57) **Abstract**

The invention leverages the connection migration capabilities of the QUIC protocol to delegate established connections to other hosts, allowing the original client device to enter power-saving modes. This approach aims to improve the energy efficiency of data uploads and downloads on mobile devices, such as smartphones, by a significant factor. The invention also opens new avenues for research in transport protocol design and energy-efficient networking.

## Description

### Field of the Invention

The field of the invention pertains to the area of network communication protocols, specifically focusing on enhancing the energy efficiency of connected devices.

### Background of the Invention

An implicit assumption of the design of existing transport protocols from TCP or UDP to SCTP, MPTCP or QUIC is that network end points are assumed to be able to process packets at all time. This is easily achievable for fixed hosts that are attached to the electrical grid, but for wireless devices, this is far from optimal from an energy viewpoint since the network stack and interface must be continuously powered up. Factors such as congestion control and the access network capacity may restrict the available bandwidth such that the wireless device will need several minutes to download the file and remain connected to the network while doing so. Many power-saving techniques exist in link layer technologies, but they are not exposed nor coordinated with the upper-layer protocols.

QUIC is a transport layer network protocol that was standardized by the IETF in 2021 after being initially proposed by Google. It is designed to provide secure, low-latency connections for applications such as web browsing. QUIC aims to improve performance and reliability compared to traditional protocols like TCP, Transmission Control Protocol. The QUIC protocol has the advantage over traditional TCP/TLS connections in that the protocol reduces the time required to establish a connection. Unlike TCP, which requires a three-way handshake, followed by TLS adding one more round-trip, QUIC uses a single round-trip handshake to establish a secure connection. This is achieved by combining the transport and cryptographic handshakes into one. QUIC supports multiplexing multiple streams over a single connection without head-of-line blocking. This means that if one stream is delayed, it does not affect the others, improving overall performance.

QUIC encrypts all its payload data by default, providing security and privacy. It uses TLS, or Transport Layer Security, for encryption, but the handshake is integrated into the protocol, reducing latency. The protocol includes mechanisms for reliable delivery and congestion control similar to TCP. It ensures that data is delivered accurately and in order, and it adapts to network conditions to avoid congestion.

The QUIC protocol enables endpoints to change the network path used over a connection in two manners. This is useful for instance for a client to change its source IP address and port, and thus its network attachment point (e.g., by switching from Wi-Fi to cellular) without disrupting the ongoing connection. This is particularly useful in mobile environments where network changes are common.

First, the QUIC connection migration feature replaces the active network path with another and works as follows: the client device establishes a QUIC connection with the host using specific Connection IDs. As soon as the client detects a change in the network (e.g., switching from Wi-Fi to cellular), it sends a packet to the host from the new IP address, including a new Connection ID from the connection. The host recognizes the Connection ID and continues the connection from the new address. The host and client can continue to exchange data without interruption, maintaining the session state and security context while avoiding revealing the network change to observers by changing Connection IDs

Second, the Multipath Extension for QUIC extends the use of a QUIC connection to several network paths that can potentially be used concurrently. These paths are established from a pair of addresses within the sets of addresses of the client and the server. By adding and removing addresses from theses sets, a QUIC connection can be established with a first set of paths and then continue with another set of paths.

QUIC connections however adhere to the end-to-end principle and assume that the connecting hosts are always reachable from one another. For wireless devices, this is far from optimal from an energy viewpoint since the network stack and interface must be continuously powered up. Many power-saving techniques exist in link layer technologies, but they are not exposed nor coordinated with the upper-layer protocols.

### Summary of the Invention

It is an object of the invention to resolve the energy inefficiency of end-to-end transport connections. The invention therefore proposes a mechanism that enables a first endpoint to delegate an established QUIC connection to a delegate host that will maintain it and exchange the data on behalf of the first endpoint while the first endpoint enters power-saving modes. Delegation in this context means that the QUIC connection that was established between two endpoints is transferred from one of these endpoints to a so-called delegate host that will temporarily perform the role of the first endpoint in maintaining the QUIC connection with the second endpoint. In doing so this first endpoint delegates its role for maintaining the connection and receiving data to this so-called delegate host.

To this aim, and according to a first aspect of the invention, there is provided a method for delegating a QUIC connection established between two endpoints, a first endpoint and a second endpoint, the method comprising the steps of freezing a first connection state of the established QUIC connection on the first endpoint to obtain a first frozen connection state, serializing said first frozen connection state, transmitting said serialized first connection state to a delegate host, deserializing said serialized first connection state by the delegate host, interrupting the processing of QUIC packets from the established QUIC connection on the first endpoint, establishing said QUIC connection between the delegate host and the second endpoint based on the first frozen connection state using a new network path, receiving incoming QUIC packets by the delegate host, storing received application data by the delegate host, sending acknowledgments and control packets by the delegate host to the first endpoint.

An endpoint or network endpoint refers to any device or system that communicates across a network to another device or system. Different types of endpoints can be considered such as client and server endpoints, or peer endpoints. Client endpoints or clients are devices that request services or resources from other endpoints, whereas server endpoints or servers are devices that provide services or resources to client endpoints. Examples of client endpoints include web browsers, email clients, and mobile apps. Examples of server endpoints include web servers, email servers, and database servers.

A QUIC connection in the context of this invention has to be understood as a network connection that follows the QUIC protocol specification, and therefore consists of QUIC packets. The QUIC protocols runs on top of UDP rather than the more traditional TCP, it therefore runs on the transport layer, Layer 4, of the OSI-model.

While TCP connections are identified by their 4-tuple, QUIC uses Connection Identifiers or CIDs negotiated for each connection. Based on these identifiers, a QUIC client can use the QUIC connection migration feature to change its source address and delegate the connection based on the transfer of these CID. The QUIC connection can therefore be transferred or delegated transparently from the perspective of the host to a delegate host with the same CID, even if it has a different IP-address.

The client device or client endpoint of the invention has to be considered as a networked device, but is preferably a battery powered device. The advantage of the power-saving capability of the invention is prominently noticeable on battery powered mobile devices. The client device may preferably be a smartphone that has a data connection over a mobile network. The client device can establish a network connection with a host by sending a connection request that is responded to by the host.

The server device or server endpoint of the invention has to be understood as a networked device that provides network services to clients connecting to it. These services may comprise services to cover upload or download, data streaming or alike.

The delegate host of this invention has to be understood as a networked device that can both connect to the client device and the server device, and that can temporarily store or buffer any received data from the server device or endpoint. The delegate host preferably can establish a high bandwidth connection with the client device to limit the connection time with the client device, which is in fact the determining factor for limiting the energy consumption. It has been shown that it is more energy efficient to transfer a same data volume at a high transfer speed, than compared to the same transfer at a lower transfer speed. The network adapter up-time primarily determines the energy consumption during the transfer.

In the context of the invention, a connection state of an established QUIC connection encompasses all the necessary information to maintain and manage a QUIC connection, including security keys, connection variables. These connection variables may comprise variables such as the Connection Identifiers (CIDs), packet numbers, flow and congestion control state variables or alike.

As a first step of the method, a first connection state of the established QUIC connection on one endpoint is frozen, which means that the established QUIC connection between the endpoints is interrupted temporarily. This means that no packets are exchanged any longer between the endpoints. This interruption is unilaterally imposed by the endpoint initiating the delegation, in other words, it stops responding to packets sent by the host.

The freezing of the QUIC connection establishes a frozen connection state. No further changes to the QUIC connection are accepted. This frozen state allows the implementation of the invention to make a snapshot of the frozen connection state, and to serialize it into a binary or other format.

Serializing a connection state refers to the process of systematically encoding the state of a QUIC connection into a preferably binary format that can be transferred to another host or endpoint device. This involves capturing all the necessary information and variables that define the current state of the connection, including the TLS keys derived from the QUIC handshake and all relevant variables required for sending and receiving QUIC packets. The serialized connection state has to be understood as a comprehensive collection of parameters and data fully determining the connection state. The serialized connection state is preferably encoded as a digital file or data blob that may be in a binary format.

A further step in the method is the transfer of the serialized connection state of the QUIC connection from the one endpoint to the other. In a case where the delegate host is a trusted device, i.e. a device that for instance resides on the endpoint owners' network or is owned by the owner of the client device, the serialized connection state of the QUIC connection may be transferred to the delegate host without applying further security measures. The connection established between the client device and the delegate host is called the control connection.

In a case where the delegate device cannot be trusted, the control connection can be established by authenticating the delegate using standard authentication techniques such as a certificate that is supplied when establishing this control connection.

As soon as the serialized connection state is successfully received by the delegate host, the delegate host may establish the QUIC connection with the second endpoint by replacing the active network path using either the QUIC migration feature provided by the QUIC protocol or the Multipath Extension for QUIC. The CIDs of the QUIC connection is retrieved from the transferred serialized connection state by means of a deserialization step; the serialized connection state in binary format is deserialized such that the QUIC connection parameters are retrieved to re-establish the QUIC connection between the delegate host and the second endpoint. The QUIC protocol supports this intrinsically; as soon as a QUIC connection is established with the second endpoint while using a valid CID, the second endpoint will authenticate the connection and allow further data packet exchanges and processing.

From this moment on, the delegate host can receive incoming QUIC packets, store received application data from the host, and send acknowledgments and control packets to the other endpoint. The first endpoint is no longer connected to the other endpoint or the delegate host and can enter a power saving state.

The use of QUIC connection delegation can significantly impact energy consumption. Delegating the connection to another device can reduce the battery power used by the original device, as it can enter power-saving modes while the delegate handles the data transfer.

In a next embodiment, a similar but reversed mechanism is implemented in the sense that the delegated QUIC connection, that is established between the delegate host and the second endpoint, is reclaimed by the first endpoint. The first endpoint for that purpose re-establishes the control connection, or establishes a control connection requesting the retrieval of the QUIC connection. The control connection between first endpoint and delegate host may have been in a state where the connection was still established but inactive, such that the first endpoint could enter its power saving state.

In a third embodiment, the method of the invention is applied in a case where the first endpoint is a client device or client endpoint, wherein the second endpoint is a server device or server endpoint. The QUIC connection between the client device and the server device is delegated to a delegate host.

The implementation of these steps are advantageous in the case of a client endpoint initiating the delegation in that the collected or retrieved data by the delegate host from the second endpoint, or in this case the server endpoint, can then be transferred to the client endpoint at an energetically optimal bandwidth, after which the network connection can be closed and the client endpoint can enter its power saving mode.

In a fourth embodiment, the method of the invention is applied in a case where the first endpoint is a first server device, wherein the second endpoint is a client device or client endpoint, and wherein the delegate host is a second server device that can provide the same services or resources as the first server device.

In the case of a server endpoint initiating the delegation, the implementation of these steps are advantageous in that the server endpoint enters a power-preserving mode while the QUIC connection is continued on another server endpoint, which is in this case the delegate host.

In one embodiment, the encoding of the data from QUIC streams is performed separately from the QUIC connection state itself. This means that the method separates QUIC data streams from the QUIC connection state that is needed to establish the QUIC connection. A control connection is used to manage the delegation process, including authenticating the delegate, transferring the serialized connection state, and providing additional QUIC application data to be sent on the delegated connection. This separation is advantageous for managing the delegation process and ensuring secure and efficient data transfer, and it simplifies the process of (de)serialization and reduces the overall complexity involved in managing and transferring the state.

In a further embodiment, the connection state explicitly comprises all relevant variables such that QUIC packets can be sent and received between the delegate host and the second endpoint.

In another embodiment of the invention, the serialized connection states are transmitted over a control connection between the first endpoint and the delegate host. This means that not only the encoding of the QUIC connection state, but also the transmitting of the QUIC connection state is performed over a separate connection: the control connection. This additional feature has the further advantage that it simplifies the process of (de)serialization and reduces the overall complexity involved in managing and transferring the state.

In yet another embodiment, the control connection is established over a different network than is used by the QUIC connection. The term network refers to the hardware and transmission media that facilitate the actual movement of data between the devices; it has to be understood as the type of physical network connection, such as for instance a Bluetooth connection, a WiFi connection, a serial connection, or even an infrared connection. The choice for a separate network for the control connection provides additional benefits in terms of energy, security, speed or simplicity of design.

In yet another embodiment, the first endpoint or client endpoint is a battery powered device. This feature is advantageous in that when the method is implemented on a battery powered device, the power-saving effects of the method are prominently noticeable. As the method allows to interrupt the ongoing network connection between the first endpoint and the second endpoint during the period that the connection is delegated to the delegate host, the network interface on the first endpoint can be powered down or be put in a power saving state. During this period of inactivity of the network interface, the respective battery power can be saved by the first endpoint.

In a next embodiment, the delegate host is a network device owned by the same user. In a case where the delegate host is owned by the user of the first endpoint, the delegate host can be considered to be a trusted device. In case that the delegate host to which the first endpoint delegates the QUIC connection is a trusted device, the requirements to secure the QUIC control connection for setting up the delegated QUIC connection are lower in comparison to a case where the delegate device cannot be trusted. In principle, in case that the delegate device is a trusted device, the transfer of the connection state still has to be performed encrypted. The application data conveyed over the delegated QUIC connection may be left as is, i.e. not encrypted when the delegate device is a trusted device.

In another embodiment, the first endpoint enters a power-saving mode after transmitting the first serialized connection state to the delegate host. This feature explicitly initiates the interruption of the network connections of the first endpoint, and initiates the period of power saving achieved through the non-utilization of the network interface.

In a next embodiment, the first endpoint retrieves the QUIC connection and received data from the delegate host when all application data expected by the first endpoint have been received by the delegate host. This feature defines the trigger for the retrieval of the QUIC connection by the first endpoint and which can be given by the delegate host as soon as all data that was expected to be received by the are now received by the delegate host. In other words, when the data transfer from the host to the delegate host is complete, the delegate host may trigger the retrieval of the QUIC connection by the first endpoint. The QUIC connection is transferred back to the first endpoint by replacing the active network path once more. After the QUIC connection is transferred to the first endpoint the received and buffered data by the delegate host from the other endpoint may be transmitted to the first endpoint. The advantage of this step in the process is that it limits to delay in the transfer of data from the other endpoint to the first endpoint to a minimum. In other words, as soon as the delegate host received all expected data from the other endpoint, it signals the first endpoint to re-establish the QUIC connection to complete the transfer to the first endpoint.

In a next embodiment, the method comprises the step of the first endpoint contacting the delegate host to initiate the delegation process. In this alternative embodiment, the first endpoint itself initiates the transfer of the delegated QUIC connection back onto itself by contacting the delegate host. This may be implemented by the first endpoint re-establishing the QUIC control connection with the delegate host, and instructing it to use the QUIC connection migration feature to transfer the QUIC connection back to the first endpoint. This embodiment may be advantageous in that the first endpoint may proactively and independently decide when to retrieve the delegated QUIC connection from the delegate host. The timing of retrieval of the delegated QUIC connection allows for weighing the power saving advantages against data transfer performance.

Yet another embodiment comprises the step of encrypting the application data exchanged over the QUIC streams using a secret established during the delegated connection handshake. This feature ensures that the data that is received and buffered by the delegate host remains encrypted for the delegate host. In case that the delegate host is an untrusted device, this encryption of the QUIC data streams is essential to ensure the confidentiality of the transferred data.

In a last embodiment, the method comprises the steps of freezing the connection state of the established QUIC connection on an endpoint participating as a server to the QUIC connection to obtain a frozen connection state, serializing said frozen connection state, transmitting said serialized connection state to a second server, deserializing said serialized connection state by the second server, interrupting the processing of QUIC packets from the established QUIC connection on the first server, establishing said QUIC connection between the client device and the second host based on the frozen connection state using the Multipath Extension for QUIC such that the active network paths are replaced by paths towards the second server, receiving incoming QUIC packets by the second server, sending application data by the second server, and sending acknowledgments and control packets by the second server to the client device. This embodiment is therefore an alternative implementation but based on the same concept of temporarily delegating a QUIC connection of one device to another device using the QUIC connection migration feature, and by means of serializing and transferring a frozen connection state from the one device to the other.

In this embodiment, the QUIC connection delegation happens between two servers that provide data or streaming services to clients. The hosts are connected via a load balancer device which is the main entry point for client connections and which decides which client connection is served by which servers.

In case that the method of the invention is applied to this configuration, each of the backend servers may decide themselves (or may receive an instruction from another device) to delegate its QUIC connections with its clients to another server in order to assume a power saving mode in a scaling-down scenario. In this scenario the QUIC connection delegation happens from one server to another, allowing the first server to offload its QUIC connections to another host and thereby freeing up its resources. The first server may then enter a power saving state to save energy. The mechanism applied is the same as described earlier whereby the QUIC connection was delegated from a client device to a delegate device as described in Claim 1, but now the delegation takes place between a first server and a second server . The steps in the process remain the same as in the first scenario described above and involve the (de)serializing of a connection state to transfer the QUIC connection from one device to another.

Discussion of the dependent claims, highlighting the optional character and additional advantages thereof.

### Brief Description of the Drawings

Fig. 1 depicts a typical protocol stack for HTTP/2 over TCP/IP represented in the OSI-model;
Fig. 2 depicts a protocol stack for HTTP/3 over QUIC/UDP/IP represented in the OSI-model;
Fig. 3 illustrates an initial situation where a client device is connected to a host via a mobile network;
Fig. 4 illustrates a subsequent situation where the client shifts its network connection with the host to a Wi-Fi connection with a higher bandwidth network;
Fig. 5 illustrates a sequence diagram of the method for delegating and retrieving a QUIC connection between a client device, a delegate host and a host;
Fig. 6 illustrates an example sequence diagram of the protocol for QUIC connection delegation.

### Detailed Description of Embodiment(s)

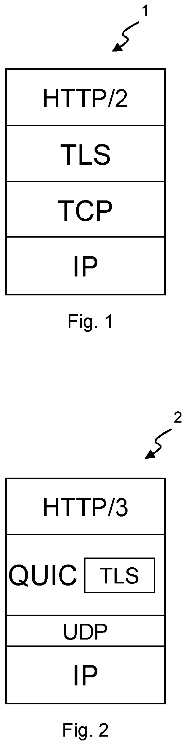

In Fig. 1, the protocol stack of a common TCP/IP connection is depicted and typically comprises four layers: HTTP/2, TLS, TCP, and IP. The HTTP/2 layer is at the top, followed by the TLS layer, which provides security for the connection. Below the TLS layer is the TCP layer, responsible for reliable transmission, and at the bottom is the IP layer, which handles addressing and routing.

HTTP/2 is the top layer in the protocol stack and corresponds to the application layer (layer 7) of the OSI model. HTTP/2 is used for transferring hypertext, such as web pages, over the internet. It facilitates communication between web hosts and web browsers.

TLS or Transport Layer Security is directly below the HTTP/2 layer and provides security for the connection. TLS encompasses aspects of the session layer (layer 5 of the OSI model). It encrypts the data being transmitted to ensure the privacy and integrity of the communication.

TCP or Transmission Control Protocol is located below the TLS layer and is responsible for reliable data transmission. TCP corresponds to the transport layer (layer 4) of the OSI model. It ensures that data is delivered correctly and in the proper order through error detection and retransmission of lost packets.

The IP or Internet Protocol layer is the bottom layer in the given description and corresponds to the network layer (layer 3) of the OSI model. IP is responsible for addressing and routing packets across the network. It determines the best route for the data to reach its destination.

In Fig. 2, the QUIC protocol stack is depicted. It again comprises four layers: HTTP/3, QUIC, UDP, and IP. The HTTP/3 layer is at the top, followed by the QUIC layer, which includes the TLS component for security. Below the QUIC layer is the UDP layer, responsible for datagram transmission, and at the bottom is the IP layer, which handles addressing and routing.

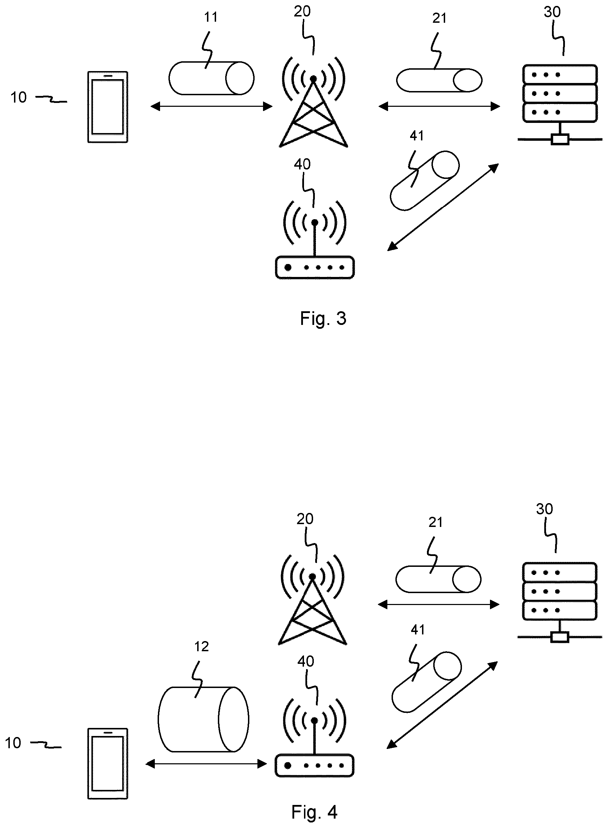

Fig. 3 and Fig. 4 illustrate the data paths for a client device using the QUIC protocol for connecting to a host and where the QUIC connection migration feature is applied. This feature allows a client to change its source IP address while maintaining an active connection. This feature is particularly useful in scenarios where a device, such as a smartphone, switches from one network to another, for example, from cellular data to Wi-Fi.

In Fig. 3, when a client device (10) or smartphone initially connects to a host (30) using QUIC, it establishes a connection using its current IP address, which is associated with the cellular or mobile data network to which the client established a connection. In fact, the client device (10) will establish the network connection with a cellular tower (20) which in most cases assigns the IP address to the client device. Each leg of the connection is characterized by its bandwidth; the bandwidth of the cellular or mobile connection is depicted as (11), and the bandwidth of the internet connection is depicted as (21). The diameter of the cylinder is a measure for the bandwidth, therefore the bandwidth of the cellular or mobile connection would be in this case greater than the bandwidth of the internet connection between the cellular tower (20) and the host (30).

Each QUIC connection is identified by a unique connection ID rather than the IP address and port number. This connection ID allows the host to recognize the connection regardless of the client's IP address. As the smartphone moves out of the cellular or mobile data coverage area in Fig. 4 and switches to Wi-Fi, its IP address changes. Its new IP-address is assigned by the Wi-Fi router (40). The client device detects this change in the network and informs the host of its new IP address by sending a special packet called a "path challenge" from the new IP address. This packet is used to verify that the client can receive packets at the new address.

Upon receiving the path challenge, the host (30) responds with a "path response" packet to the new IP address. This exchange ensures that the new path is valid and that the client device (10) can indeed receive data at the new address. Once the path validation is successful, the host (30) updates its records to associate the connection ID with the new IP address. The QUIC connection continues seamlessly without interruption, allowing the smartphone to maintain its active sessions, such as ongoing downloads or streaming, without any noticeable disruption to the user.

In summary, the QUIC connection migration feature allows a client device to change its source address while keeping the connection active by using connection IDs and a path validation process. This ensures that client devices like smartphones can switch networks smoothly and maintain their connections without interruption.

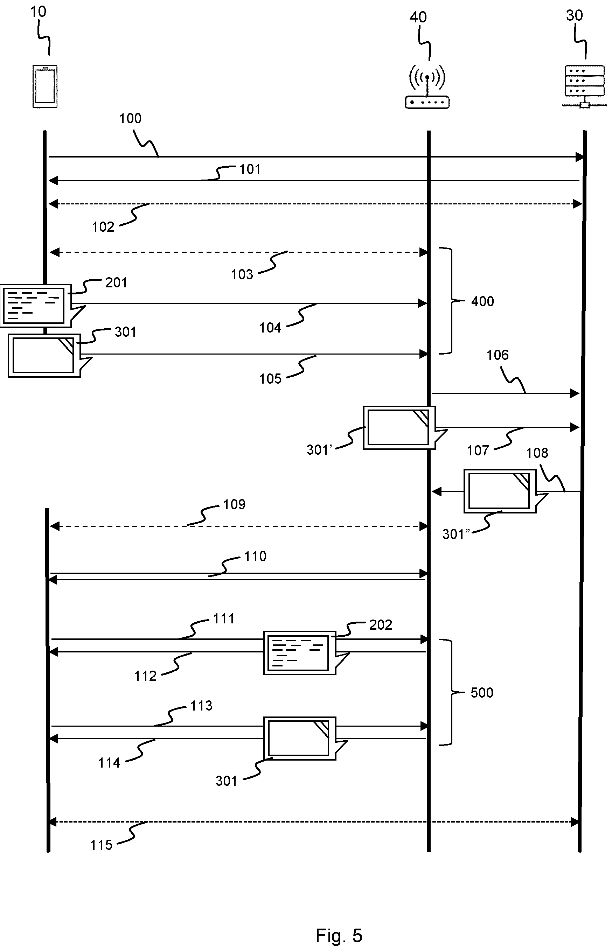

Fig. 5 illustrates a sequence diagram of an embodiment of the method of the invention for delegating a QUIC connection between a client device (10) or client endpoint and a server device (30) or server endpoint from the client device to a delegate host (20). In the method of the invention, the QUIC connection is delegated or temporarily offloaded by the client device to a so-called delegate host (20).

Consider a case where a client device (10) or smartphone starts a large file download from a host (30). Unfortunately, factors such as congestion control and the access network capacity restrict the available bandwidth (11) such that the smartphone will need several minutes to download the file. In order to preserve its battery, the smartphone opts to delegate the established connection to another device, such as for instance a computer, laptop or access router, owned by the same user. To do so, the QUIC stack on the smartphone freezes the connection state and serializes it.

Then, it contacts the device that will act as a delegate for this connection and sends it the serialized connection state. The delegate device then continues the connection using the QUIC connection migration feature. The delegate device processes the incoming QUIC packets, stores the received application data and sends the required acknowledgments and control packets. Later, the smartphone retrieves the QUIC connection and all its received data from the delegate at a higher available bandwidth in its local network. A delegate differs from a proxy as the proxy maintains two transport connections, i.e. towards the client device and the server device, while the delegate becomes in charge of an existing transport connection.

The QUIC protocol specification outlines numerous requirements for how QUIC clients and hosts should behave. However, it does not provide a detailed description of the internal state that makes up a QUIC connection. This design choice is intentional, as the protocol specification aims to focus more on the behaviour of QUIC connections rather than their internal structure, allowing implementers the flexibility to design their systems according to their specific needs.

Based on this, the method of the invention is based on capturing and transferring the state of a QUIC connection for allowing the connection to be handed over to another device. Specifically, the method encodes the state of the QUIC connection into a binary or other format, which can then be transferred between systems. This connection state includes the TLS keys generated during the QUIC handshake, as well as all other essential information needed for sending and receiving QUIC packets.

In Fig. 5, the sequence diagram shows a client device (10) that establishes a QUIC connection (100) towards a QUIC host (30) that is agnostic to QUIC connection delegation. This is advantageous in that the protocol of the invention can be used with any QUIC host; no adaptations are required at the target device.

When an untrusted delegate host (40) will be used, the client device (10) and server device (30) negotiate a second-layer stream encryption during the handshake (101). The client device can use the connection in a regular manner, e.g., exchanging some HTTP messages (102). The method of the invention enables QUIC connection delegation regardless of the application protocol as it acts on the QUIC connection and its QUIC streams. The connection exchanging for instance some HTTP messages will become the delegated connection (102).

To delegate this connection (400), the client device establishes a network connection to the delegate host, which is called the control connection (103). This network connection may be established using any suitable protocol for establishing the control connection (103) such as HTTP/3, HTTP/2, WebSockets, or alike. The client device (10) authenticates the delegate (40) using standard authentication techniques such as a certificate that it supplied during the connection handshake of the control connection (103). When the control connection (103) is established, the client device stops or interrupts processing and discards incoming QUIC packets on the delegated connection (102). The delegated connection (102) is now frozen, and the connections state is frozen. In a next step, the client device serializes and sends its connection state (201) to the delegate (40) over the control connection (104). At this point, the client device does not process the delegated connection (102) anymore. It can provide (105) additional QUIC data (301) to be sent on the delegated connection.

The client device (10) may authenticate to the delegate (30) with a client_token proving its past ownership of the delegated connection (102). This token may for instance be generated by successively using the TLS Exporter of the delegated connection and feeding its output to the Exporter of the control connection using the protocol of the invention. The resulting token can be verified by each peer by reproducing these steps and comparing values. The token proves that the client device (10) has access to both the QUIC delegated connection (102) and the control connection (103) while preventing on-path attackers from stealing these tokens. When the delegate (30) receives (105) stream data (301), it queues it on the delegated connection. The smartphone can then stop the control connection (103).

After receiving the delegated connection state (201), the delegate (30) resumes the delegated connection, called the resumed delegated connection (107) and performs QUIC migration (105) to transition to its source address. It sends any QUIC stream data (301') as instructed by the client device, e.g., an HTTP request. It processes incoming QUIC packets (108), sends acknowledgments, and stores the received QUIC stream data (301").

Later, the client device (10) reconnects with a new control connection (109) and can check on the status of the delegated connection (107, 108) to decide when to retrieve it or access application data (301"). When requested for state retrieval, the delegate (30) stops processing the delegated connection (107, 108), serializes its updated state (202), and sends (112) it in response. The delegate (30) authenticates using a delegate_token constructed in a similar manner, but with a different TLS Exporter initial context value, to prove its legitimate access to the delegated QUIC connection.

Finally, the client device (10) retrieves (114) the QUIC stream data (301) received on the delegated connection. The client device can resume the QUIC connection from its updated state and trigger a QUIC migration (115).

Transferring a QUIC connection can pose a privacy problem when the delegate device is not trusted, as it will have access to the application data exchanged over the connection. When the application protocol is not encrypted, such as HTTP/3, the connection recipient can observe and modify HTTP messages. The Encrypted Content-Encoding as specified in RFC8188 enables securing the content of HTTP messages, for instance, as they go through HTTP intermediaries such as push services from the Web Push protocol. However, it is restricted to the HTTP protocol.

This problem may be addressed by applying an optional protection that secures all the application data exchanged in QUIC streams. This additional encryption layer is negotiated during the QUIC handshake (103) using a dedicated QUIC transport parameter named stream_encryption. After the handshake two secrets are generated using the TLS Exporter of the connection. The TLS Exporter context value is composed of two concatenated parts, each sent by one endpoint within its stream_encryption QUIC transport parameter. Each secret is used to generate keys and IVs for each sending part of a QUIC stream using HKDF-Expand-Label.

We introduce a thin record layer atop QUIC streams for endpoints to choose the length of each encrypted payload given an upper bound negotiated within the stream_encryption QUIC transport parameter. Each record may start with an integer indicating the size of the application data following it. This integer and the QUIC Stream ID are part of the Associated Data when performing AEAD operations. This guarantees that a given record cannot be swapped with another one from any other QUIC streams. The AEAD nonce is formed by combining the IV and the offset of this record within the QUIC stream. This further prevents records from being moved within QUIC streams by an attacker.

When transferring a QUIC connection that has enabled stream_encryption, the endpoint must redact the context parts exchanged in the QUIC transport parameters and all cryptographic materials derived as defined in this section. This ensures that, when being transferred, the new endpoint hosting the connection cannot access the application data nor tamper with it. Each endpoint should announce a context value sufficiently large to prevent brute-force attacks on these keys when transferring a QUIC connection.

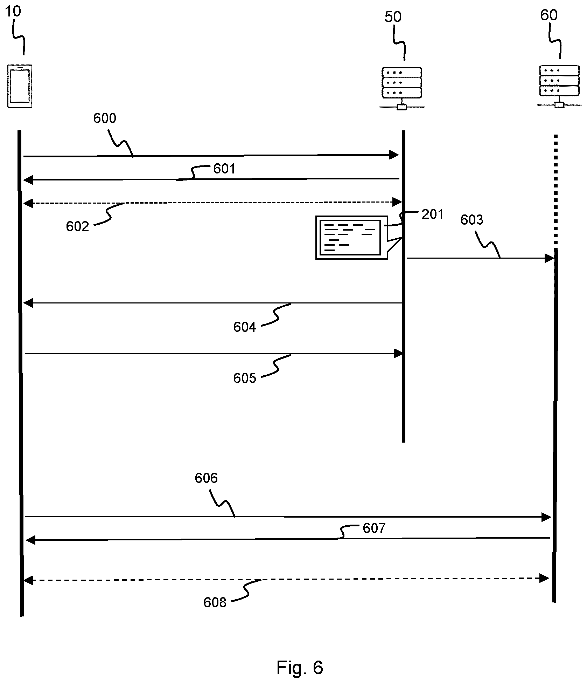

In addition to QUIC connection delegation on client devices, the method may be applied on server devices as well. The QUIC protocol enables a service to scale-up using load-balancers together with mechanisms such as Connection IDs and the Preferred Address transport parameter. However, it lacks a scale-down mechanism in the presence of long QUIC connections. Using delegation, a server endpoint could transfer the state of a QUIC connection to another server endpoint when scale-down is needed. However, as the QUIC protocol does not allow a serverendpoint to migrate, this would require to transfer the original host IP and port as well. Fig. 6 illustrates how this constraint can be lifted by using the QUIC multipath extensions together with QUIC protocol feature called Additional Addresses, an extension enabling hosts to announce their addresses.

In this implementation, first, a client device (10) or second endpoint establishes a QUIC connection (600) towards a first endpoint (50) or first server device and enables the Multipath and Additional Addresses extensions of the QUIC protocol. The client device (10) and the first endpoint (50) uses the connection in a regular manner, e.g. exchanging an HTTP request and response (602). When the first endpoint (50) decides to delegate the QUIC connection, e.g. when scale-down is required to power-off the first host (50), it stops processing incoming QUIC packets, serializes the QUIC connection state (201) and transfers (603) it to the delegate host (60). The transfer uses the same protocol as previously discussed. The first endpoint (50) then notifies

(604) the client device (10) or second endpoint that the connection cannot continue on the original path but with a new path towards the address of the delegate host (60). The client device (10) is agnostic of the QUIC delegation and simply follows the specification of the Multipath extension. Then, the client device abandons (605) the path towards the first endpoint and triggers Path Validation towards the delegate host

(606). As the delegate host (60) has received the QUIC connection state (201), it can process the client packets and complete the validation process (607). This completes the host-to-host QUIC delegation, and allows the continued QUIC connection (608) between the client device (10) and the delegate host (60).

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for delegating (400) a QUIC connection established between a first endpoint (10) and a second endpoint (30), the method comprising the steps of:
- freezing a first connection state of the established QUIC connection on the first endpoint (10) to obtain a first frozen connection state;
- serializing said first frozen connection state;
- transmitting said serialized first connection state (201) to a delegate host (40)
- deserializing said serialized first connection state by the delegate host (40);
- interrupting the processing of QUIC packets from the established QUIC connection on the first endpoint (10);
- establishing said QUIC connection (106) between the delegate host (40) and the second endpoint (30) based on the first frozen connection state using QUIC connection migration or Multipath Extension for QUIC;
- receiving incoming QUIC packets (108) by the delegate host;
- storing received application data (301) by the delegate host (40);
- sending acknowledgments and control packets by the delegate host to the second endpoint (30).

2. The method according to claim 1, further comprising the steps of:
- requesting retrieval (109) by the first endpoint (10) of the QUIC connection from the delegate host (40),
- freezing a second connection state of the established QUIC connection on the delegate host to obtain a second frozen connection state;
- serializing said second frozen connection state (202);
- transmitting (112) said serialized second connection state to the first endpoint (10);
- receiving stored application data (301) from the delegate host (40) by the first endpoint (10);
- disconnecting the established QUIC connection on the delegate host;
- retrieving (500) the QUIC connection between the first endpoint (10) and the second endpoint (30) based on the second frozen connection state and establishing said QUIC connection using QUIC connection migration or Multipath Extension for QUIC;
- sending acknowledgments and control packets (115) by the first endpoint (10) to the second endpoint (30).

3. The method according to any of the preceding claims, wherein the first endpoint (10) is a client device or client endpoint, wherein the second endpoint (30) is a server device or server endpoint.

4. The method according to any of the preceding claims, wherein the first endpoint (50) is a first server device, wherein the second endpoint (10) is a client device or client endpoint, and wherein the delegate host (60) is a second server device that can provide the same services as the first server device.

5. The method according to any of the preceding claims, wherein the serialized connection states are sent over a control connection between the first endpoint (10) and the delegate host (40).

6. The method according to claim 5, wherein the control connection is established over a different physical transport layer than is used by the QUIC connection.

7. The method according to claim 3, wherein the first endpoint (10) is a battery powered device.

8. The method according to any of the preceding claims, wherein the delegate host is a network device owned by the same user.

9. The method according to any of the preceding claims, wherein the first endpoint (10) retrieves the QUIC connection and received data from the delegate host when the application data expected by the first endpoint (10) have been received by the delegate host.

10. The method according to any of the preceding claims, further comprising the step of the first endpoint (10) contacting the delegate host to initiate the delegation process.

11. The method according to any of the preceding claims, wherein the first endpoint (10) provides conditions for requesting retrieval by the first endpoint (10) of the QUIC connection from the delegate host.

12. The method according to any of the preceding claims, further comprising encrypting the application data exchanged over the QUIC streams using a secret established during the delegated connection handshake.

13. The method according to any of the preceding claims, wherein the first endpoint (10) retrieves the application data received on the delegated connection from the delegate host and resumes the QUIC connection from its updated state.
